(19) Europäisches Patentamt
European Patent Office
Office européen des brevets

(11) Numéro de publication: **0 307 259**
**A1**

(12)
# DEMANDE DE BREVET EUROPEEN

(21) Numéro de dépôt: **88401975.3**

(22) Date de dépôt: **29.07.88**

(51) Int. Cl.4: **C 08 G 79/08**
C 04 B 35/00

(30) Priorité: **11.09.87 FR 8712587**

(43) Date de publication de la demande:
**15.03.89 Bulletin 89/11**

(84) Etats contractants désignés:
**AT BE CH DE ES FR GB GR IT LI LU NL SE**

(71) Demandeur: **RHONE-POULENC CHIMIE**
**25, quai Paul Doumer**
**F-92408 Courbevoie Cédex (FR)**

(72) Inventeur: **Mignani, Gérard**
**2, avenue des Frères Lumière**
**F-69008 Lyon (FR)**

**Lebrun, Jean-Jacques**
**24, rue Pierre Brunier**
**F-69300 Caluire et Cuire (FR)**

(74) Mandataire: **Esson, Jean-Pierre et al**
**Rhône-Poulenc Interservices Service Brevets Chimie 25, quai Paul Doumer**
**F-92408 Courbevoie Cedex (FR)**

(54) **Polymères à base de bore et d'azote, leur procédé de préparation et leur utilisation dans la fabrication de produits et articles céramiques à base de nitrure de bore.**

(57) L'invention a trait à un procédé de préparation d'un polymère organoborique précurseur de nitrure de bore, ledit procédé étant caractérisé en ce que l'on fait réagir (a) un mélange comprenant un trihalogénoborane (composé A) et un composé présentant au moins un atome de bore sur lequel sont directement liés deux atomes d'halogène (composé B), sur b) un composé comprenant au moins un groupement $NH_2$ (composé C).

Elle vise également les nouveaux polymères obtenus par ledit procédé.

EP 0 307 259 A1

**Description**

**POLYMERES A BASE DE BORE ET D'AZOTE, LEUR PROCEDE DE PREPARATION ET LEUR UTILISATION DANS LA FABRICATION DE PRODUITS ET ARTICLES CERAMIQUES A BASE DE NITRURE DE BORE**

La présente invention a trait à un nouveau procédé général de préparation de polymères à base de bore et d'azote.

Elle concerne également de nouveaux polymères à base de bore et d'azote, susceptibles d'être obtenus notamment par ledit procédé.

Elle concerne enfin, à titre d'application, l'utilisation de ces polymères dans la fabrication de produits et articles céramiques à base de nitrure de bore, notamment sous forme de fibres.

On sait que le nitrure de bore est un matériau de plus en plus recherché, en raison notamment de sa stabilité aux hautes températures, de sa résistance aux chocs thermiques, de sa grande inertie chimique et de sa très bonne conductivité thermique. D'autre part, sa faible conductivité électrique en fait un isolant de choix.

On connait à l'heure actuelle divers procédés pour préparer du nitrure de bore.

L'un d'entre eux consiste à faire réagir en phase gazeuse du trichlorure de bore avec de l'ammoniac. On obtient ainsi une poudre fine de nitrure de bore, qu'il est possible de fritter pour obtenir des pièces massives. Toutefois, les pièces obtenues présentent une microporosité qui peut être très génante pour certaines applications.

Plus récemment, on a découvert qu'il était possible de préparer du nitrure de bore par pyrolyse de polymères précurseurs.

L'intérêt de la voie polymère réside surtout dans les possibilités de mise en forme de ce type de produit, et plus particulièrement pour l'obtention, après pyrolyse, de fibres en nitrure de bore.

On a ainsi décrit dans le brevet US 4.581.468 un polymère organoborique qui est obtenu par action de l'ammoniac (ammonolyse) sur un trichloro-trialkylsilyl-borazole (composé cyclique), et qui, indique-t-on, permet d'aboutir, après filage puis pyrolyse à 970°C, à des fibres de nitrure de bore.

Toutefois, le polymère cyclique décrit dans ce document est très difficile à préparer, donc couteux, et, de ce fait, ne peut guère laisser espérer une production à l'échelle industrielle.

La présente invention a donc pour but de résoudre les problèmes ci-dessus et de proposer des moyens simples, efficaces, économiques et de mise en oeuvre aisée, pour obtenir sous des formes les plus diverses (fils, fibres, articles moulés, revêtements, pellicules, films, etc...) des polymères organométalliques à base de bore et d'azote qui, lors de leur pyrolyse, donnent des produits à base de nitrure de bore avec une rendement pondéral élevé.

On a maintenant trouvé, et il s'agit là d'un des premiers objets de la présente invention, que l'on peut obtenir, avec des rendements pondéraux élevés, du nitrure de bore à partir de polymères précurseurs à base de bore et d'azote lorsque ces polymères ont été préparés au moyen du nouveau procédé selon l'invention, ledit nouveau procédé de préparation étant caractérisé par le fait que l'on fait réagir (a) un mélange comprenant un trihalogénoborane (composé A) et un composé présentant au moins un atome de bore sur lequel sont directement liés deux atomes d'halogène (composé B), sur (b) un composé comprenant au moins un groupement $NH_2$ (composé C).

Pour une meilleure compréhension de l'exposé de l'invention, on donne les définitions de principe suivantes :

- pour les composés A et les composés B ci-dessus, on définit une fonctionnalité f égale au nombres d'atomes d'halogène liés directement à l'atome de bore. Ainsi, le composé A, qui est un trihalogénoborane, présente une fonctionnalité égale à 3, et le composé B présente une fonctionnalité égale à 2
- les composés C sont appelés agents d'aminolyse dans le cas le plus général (composé aminé présentant un groupement $NH_2$), et agent d'ammonolyse dans le cas plus particulier où il s'agit de l'ammoniac
- les produits de réaction obtenus à partir des composés A, B et C sont alors appelés, selon le cas, aminolysats ou ammonolysats, ces derniers étant donc inclus dans la famille des aminolysats. Ces aminolysats, comme il sera expliqué plus en détails par la suite, rentrent dans le cadre des nouveaux polymères à base de bore et d'azote constitutifs d'un second objet de la présente invention.

Le procédé de préparation selon l'invention repose donc essentiellement sur une co-aminolyse d'un mélange d'au moins un composé contenant un atome de bore difonctionnel et d'au moins un composé contenant une atome de bore trifonctionnel.

La Demanderesse a en effet découvert que, de façon totalement inattendue et surprenante, cette co-aminolyse permet d'aboutir à des polymères auxquels une structure à réseau particulièrement réticulé confère une stabilité thermique accrue lors de la pyrolyse, et de ce fait augmente les rendements en céramique.

Le composé A trifonctionnel de départ généralement utilisé est le trichloroborane, bien que tout autre halogénoborane puisse convenir, comme par exemple un trifluro, un tribromo ou un triido-borane.

Le composé B difonctionnel de départ des également un composé généralement chloré.

Ce composé répond de préférence à la formule (1) suivante :

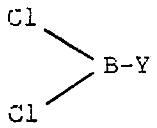 (1)

dans laquelle Y représente

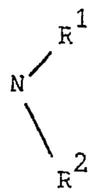

les radicaux $R^1$ et $R^2$, identiques ou différents, étant choisis parmi l'atome d'hydrogène, les radicaux hydrocarbonés et les radicaux organosilylés et hydrogénoorganosilylés.

Les radicaux hydrocarbonés les plus usités sont les radicaux alkyles, cycloalkyles, aryles, alkylaryles et arylalkyles, ainsi que les radicaux alcenyles et alcynyles.

Parmi les radicaux alkyles convenant pour la présente invention, on peut citer à titre d'exemples les radicaux méthyle, éthyle, propyle, butyle, pentyle, hexyle, heptyle et octyle. Parmi les radicaux cycloalkyles, on peut citer les radicaux cyclopentyle, cyclohexyle et cycloheptyle. A titre de radicaux aryles : les radicaux phényle et naphtyle ; de radicaux alkylaryles : les radicaux tolyle et xylyle ; et enfin de radicaux arylalkyles : les radicaux benzyle et phénylethyle.

A titre de radicaux alcenyles, on peut citer plus particulièrement les radicaux vinyle, allyle, butenyle et pentenyle.

Enfin, on peut citer comme radicaux alcynyles, les radicaux éthynyle, propynyle et butynyle.

Selon un mode préférentiel de réalisation de l'invention, les radicaux $R^1$ et $R^2$ sont des radicaux organosilylés ou hydrogénoorganosi lylés, et plus particulièrement des radicaux (triorgano)silylés ou (hydrogénodiorgano)silylés. Encore plus préférentiellement, on utilise des radicaux (trialkyl)silylés, tels que notamment les radicaux triméthyl, triéthyl, tripropyl, tributyl, tripentyl, trihexyl, triheptyl et trioctyl-silylés. Les radicaux (triméthyl)silylés conviennent particulièrement bien.

Les composés de formule (1) ci-dessus sont bien connus de l'état de la technique, et peuvent être préparés par tout moyen connu en soi.

Par exemple, dans le cas de radicaux $R^1$ et $R^2$ de type alkyles, on pourra se référer notamment aux travaux de WILBERG et SCHUSTER (Zeitschrist für Anorganische Chemie, 1933, 213, page 77), de BROWN (Journal of American Chemical Society, 1952, 74, page 1219), ou bien encore de BURG et BANUS (Journal of American Chemical Society, 1954, 76, page 3903).

En ce qui concerne des radicaux $R^1$ et $R^2$ du type triorganosilylé, on pourra se reporter aux travaux de JENNE et NIEDENZU (Inorganic Chemistry, 1964, 3, 68), de SUJISHII et WITZ (Journal of American Ceramic Society, 1957, 79, page 2447), ou bien encore de WANNAGAT (Angew Chemie International Edition, 3, 1964, page 633).

D'une manière générale, le composé difonctionnel désiré peut être obtenu par action de $BCl_3$ sur

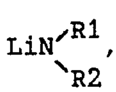,

avec des conditions de températures et de rapports molaires convenables.

Concernant enfin les agents d'aminolyse (composé C) rentrant dans le cadre du procédé selon l'invention, on peut citer l'ammoniac, les amines primaires, les diamines (hydrazine, alkylhydrazine, hydrazide, alkylenediamine ..), les amides, les silylamines, etc...

On utilise toutefois de préférence des composés qui répondent à la formule (2) suivante :

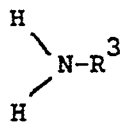

(2)

dans laquelle le radical $R^3$ est choisi parmi l'atome d'hydrogène, les radicaux hydrocarbonés et les radicaux organosilylés et hydrogénoorganosilylés. Conviennent ainsi plus particulièrement :

- l'ammoniac ($R^3$ = atome d'hydrogène)
- les organoamines primaires ($R^3$ = radical alkyl, cycloalkyle, aryle, alkylaryle ou arylalkyle), telles que par exemple la méthylamine, l'éthylamine, la propylamine, la butylamine, la pentylamine, l'hexylamine, l'heptylamine et l'octylamine, la cyclopropylamine, la phénylamine...
- les silylamines, et plus particulièrement les triorganosilylamines comme la (triméthylsilyl)amine et la (triéthylsilyl)amine, ou bien encore les (hydrogénodiorganosilyl)amine, comme par exemple l'(hydrogénodiméthyl(silyl)amine.

Les agents d'aminolyse préférés sont les alkylamines primaires et l'ammoniac.

Selon un mode de mise en oeuvre encore plus préféré, on opère avec l'ammoniac.

Le schéma général des réactions d'aminolyse au sein du milieu réactionnel est le suivant :

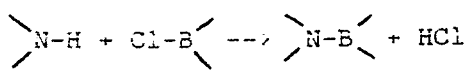

La réaction d'aminolyse peut être opérée en masse, ou, de préférence, en milieu solvant organique (hexane, pentane, toluène ...) et sous conditions anhydres.

On travaille généralement à la pression atmosphérique, bien que des pressions inférieures ou supérieures ne soient bien évidement pas exclues.

D'autre part, les réactions d'aminolyse étant généralement assez exothermiques, on préfére opérer à basse température.

La durée de la réaction, suivant les quantités de réactifs introduites, peut varier de quelques minutes à plusieurs heures.

Le rapport molaire dans le mélange de départ entre le composé trifonctionnel (forme T) et le composé difonctionnel (forme D) peut varier dans une très large mesure. D'une manière générale, on observe que plus le pourcentage du composé trifonctionnel augemente dans ce mélange, et plus le rendement pyrolytique en nitrure de bore du polymère obtenu en fin de réaction s'élève. Selon un mode préféré de réalisation de l'invention, le rapport molaire T/D dans le mélange de départ est au moins de 1.

A l'isssue de cette étape de réaction, on sépare le polymère du milieu de réaction, notamment du chlorydrate d'ammonium formé, et ceci par tout moyen connu en soi, par exemple par filtration, ou bien encore par extraction et décantation au moyen notamment d'une solution ammoniaque.

Le polymère ainsi récupéré, après éventuellement élimination du solvant puis séchage, constitue alors la production.

Outre le procédé général de préparation précédemment décrit, l'invention concerne également, à titre de produits nouveaux, des polymères à base de bore et d'azote, susceptibles d'être obtenus notamment par ledit procédé, et qui présentent, lors de leur pyrolyse, des rendements pondéraux en nitrure de bore particulièrement élevés.

On a maintenant trouvé que l'on peut obtenir, avec des rendements ponderaux éleves, du nitrure de bore à partir d'un polymère précurseur à base de bore et d'azote, ledit polymère étant caractérisé en ce qu'il présente par molécule :

(a) au moins un motif de formule (I) :

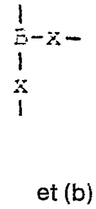

(I)

et (b) au moins un motif de formule (II) :

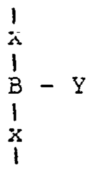

(II)

formules dans lesquelles Y représente

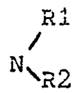

et X représente N-$R^3$, les radicaux $R^1$, $R^2$ et $R^3$ étant choisis, identiques ou différents, parmi l'atome d'hydrogène, les radicaux hydrocarbonés et les radicaux organosilylés et hydrogénoorganosilylés.

La Demanderesse a en effet découvert que de tels polymères à base de bore et d'azote, qui possèdent une structure en réseau essentiellement formée d'une combinaison de motifs de formule (I) et de motifs de formule (II) tels que définis ci-dessus, présentent une tenue à la pyrolyse nettement améliorée par rapport aux précurseurs connus jusqu'alors, et par là même permettent d'obtenir, avec de bons rendements pondéraux en céramique, des matériaux à base de nitrure de bore.

On aura d'ores et déjà compris qu'il est possible d'obtenir des polymères présentant tous les motifs (I) et (II) désirés, c'est-à-dire tous les radicaux $R^1$, $R^2$ et $R^3$ désirés, simplement en faisant réagir des composés B et C tels que définis plus haut qui possèdent les mêmes radicaux $R^1$, $R^2$ et $R^3$.

En transposant au niveau des nouveaux polymères selon l'invention la notion de fonctionnalité qui a été définie ci-avant dans la description pour les composés A et B, les motifs de formule (I) peuvent être considérés de façon formelle comme trifonctionnels, car résultant d'une aminolyse d'un bore au départ trifonctionnel (composé A), et les motifs de formule (II) comme difonctionnels, car résultant de l'aminolyse d'un bore au départ difonctionnel (composé B).

De même, le rapport entre les motifs de formule (I) et ceux de formule (II) dans le polymère final peut être ajusté simplement au moyen du rapport approprié entre les composés A et les composés B présents initialement dans le milieu réactionnel.

Selon un mode préféré de réalisation de l'invention, le polymère, comporte au moins 50 % en moles de motifs de formule (I).

D'une manière générale, on observe que plus le pourcentage de motifs (I) s'élève, et plus le rendement en nitrure de bore après pyrolyse augmente.

A titre de radicaux hydrocarbonés et organosilylés, on pourra se référer aux divers exemples déjà donnés pour les radicaux $R^1$, $R^2$ et $R^3$ des composés B et C.

Conviennent ainsi plus particulièrement les radicaux alkyles, cycloalkyles, aryles, alkylaryles et arylalkyles, ainsi que les radicaux (triorgano)silylés, comme par exemple les radicaux (trialkyl)silylés.

Selon un mode de réalisation préféré de l'invention, le radical $R^3$ est choisi parmi l'atome d'hydrogène et les radicaux alkyles.

De manière encore plus préférentielle, le radical $R^3$ représente l'hydrogène.

D'autre part, pour obtenir les meilleurs rendements en céramique lors de la pyrolyse, il est préférable de choisir les radicaux $R^1$ et $R^2$ parmi des radicaux organosilylés, et plus particulièrement parmi des radicaux (trialkyl)silylés.

Dans un exemple particulièrement préféré de polymère selon l'invention, les motifs (I) et (II) sont du type suivant :

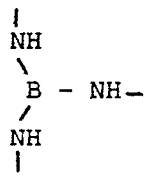

(I)

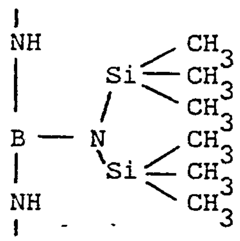

(II)

Les polymères selon l'invention présentent une masse molaire moyenne en nombre qui peut être comprise entre 300 à 50 000, de préférence comprise entre 500 et 5 000.

Ils présentent d'autre part une masse molaire moyenne en poids pouvant s'étaler entre 600 et 100 000, de préférence entre 1 000 et 10 000.

Suivant le rapport molaire existant entre les motifs de formule (I) et ceux de formule (II), les polymères selon l'invention peuvent se présenter, à température ambiante, sous une forme allant d'une huile assez visqueuse ou très visqueuse jusqu'a l'état solide. D'une manière générale, à un taux élevé de motifs de formule (I) correspond un polymère de poids molaire élevé, donc de viscosité élevée.

Les polymères selon l'invention sont d'autre part solubles dans la plupart des solvants organiques usuels (hexane, toluène ...), ce qui peut être très avantageux au niveau de leur possibilité de mise en forme.

Les polymères à base de bore et d'azote selon l'invention trouve une application toute particulière dans la fabrication de produits et articles céramiques contenant, au moins en partie, du nitrure de bore.

Dans le cas le plus général (obtention de poudres), on pyrolyse alors le polymère dans une atmosphère inerte, sous vide, ou de préférence, sous ammoniac, à une température comprise entre 100 et 2 000°C jusqu'à ce que le polymère soit converti entièrement en nitrure de bore.

Le polymère, avant pyrolyse, peut également être mis en forme, par moulage ou par filage par exemple. Dans le cas où l'on désire obtenir des fibres, le polymère est filé au moyen d'une filière classique (après fusion éventuelle si le polymère est initialement à l'état solide), puis est traité thermiquement à une température comprise entre 100 et 2 000 °C et de préférence sous atmosphère d'ammoniac, pour donner une fibre en nitrure de bore.

Les fibres obtenues peuvent alors servir de structure de renforcement pour des matériaux composites du type céramique/céramique ou céramique/métal.

Des exemples illustrants l'invention vont maintenant être donnés.

Exemple 1

Cet essai illustre l'ammonolyse d'un composé borique difonctionnel seul, et sort donc du cadre de l'invention.

Le composé utilisé répond à la formule :

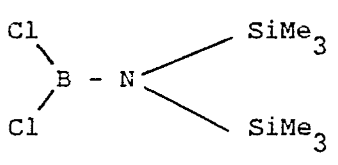

(Me = $CH_3$)

Dans un tricol de 500 ml muni d'une agitation mécanique, d'un tube d'entrée de gaz et d'un condenseur à $CO_2$ solide, on introduit sous azote sec :

- 6,85 g (0,0283 M) de

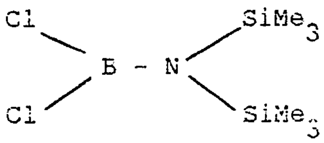

- 270 ml d'hexane (distillé sur $AlLiH_4$).

Le mélange est refroidi à -40°C ; on introduit alors le $NH_3$ gazeux; la réaction est exothermique. Durant l'introduction de $NH_3$ gazeux, la température est maintenue à -28°C. Le débit d'introduction de $NH_3$ est maintenu à environ 10 l/h de gaz ; on introduit 12,5 l de $NH_3$ gazeux (0,558 mole).

Il se forme en cours d'essai du chlorhydrate d'ammonium qui épaissit la solution. En fin d'essai, on filtre le $NH_4Cl$ formé sur verre fritté. Le précipité est lavé plusieurs fois à l'aide d'hexane (distillé sur $AlLiH_4$). On récupère 2,9 g de chlorhydrate d'ammonium (3,05 g théorique). La solution récupérée est limpide.

Les solvants sont évaporés sous une pression de 20 mm de Hg ; on recupère 4,8 g d'une huile peu visqueuse et incolore.

Rendement de la réaction d'ammonolyse : 91,3 %

$\overline{M}n = 300$ IP = 1

$\overline{M}w = 300$ $\overline{M}z = 400$

Le polymère est ensuite pyrolysé sous argon. Le rendement TGA à 800°C est alors de 6,0 %.

<u>Exemples 2 à 8</u>

On réalise maintenant et conformément au procédé selon l'invention, une co-ammonolyse entre $BCl_3$ et le composé difonctionnel utilisé dans l'exemple comparatif.

Le mode opératoire est identique à celui de l'exemple comparatif.

Pour ces essais, on a simplement fait varier le rapport molaire

$BCl_3$/ 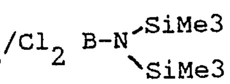

(T/DC) dans le mélange de départ.

Le tableau ci-dessous rassemble les résultats ; on y a indiqué :

- la concentration totale des espèces T et D dans le solvant de départ (conc.)
- la température de réaction (T°C)
- le rendement de la réaction de co-ammonolyse (Rdt %)
- les masses molaires moyennes en nombre et en poids des polymères obtenus (respectivement $\overline{M}n$ et $\overline{M}w$)
- l'indice de polydispersité IP
- le rendement TGA à 800°C.

Pour tous les essais 2 à 8, l'analyse montre que les polymères obtenus sont essentiellement constitués d'une combinaison de motifs de formule :

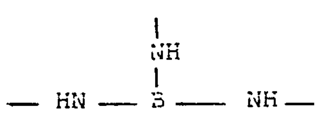

et de motifs de formule :

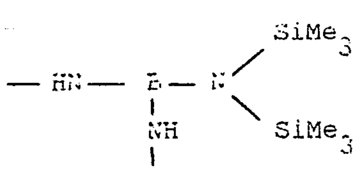

Exemple 9

Cet exemple illustre l'invention dans le cadre d'une co-ammonolyse entre $BCl_3$ et

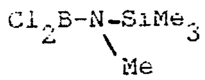

($Me = CH_3$)

Dans un réacteur de 2 litres sous azote, on introduit 920 ml d'hexane sec, 47,0 g (0,401 mole) de $BCl_3$ et 115,8 g (0,630 mole) de

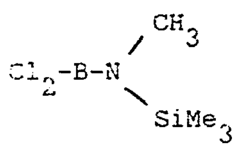

le réacteur a été préalablement refroidi à -37° C.

On introduit ensuite de l'ammoniac : 255 litres (11,38 moles).

La durée de l'introduction de $NH_3$ est de 5 h. Après filtration, rinçage à l'hexane et évaporation du solvant, on récupère 29,1 g d'une huile très visqueuse. Le rendement isolé est de 31 %.

TGA (850° C) : 31 %

$\overline{M}n$ : 460

$\overline{M}w$ : 640

IP : 1,38

L'analyse montre que le polymère obtenu est essentiellement constitué d'une combinaison de motifs de formule :

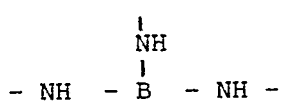

et de motifs de formule :

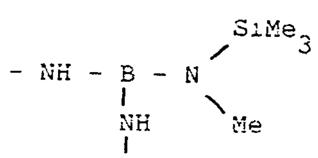

Exemple 10

Cet exemple illustre l'invention dans le cadre d'une co-ammonolyse entre $BCl_3$ et

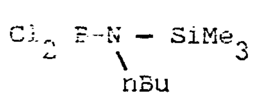

(Bu = radical butyle)

Dans un réacteur de 2 litres sous azote, on introduit 1,58 l d'hexane sec, 78,6 g (0,67 mole) de $BCl_3$ et 145,1 g (0,64 mole) de

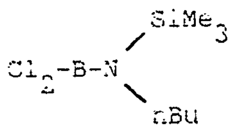

le réacteur a été préalablement refroidi à -35° C.

On introduit ensuite de l'ammoniac : 310 litres (13,84 moles) d'$NH_3$ La durée de l'introduction de $NH_3$ est de 6 h. Après filtration, rinçage à l'hexane et évaporation du solvant, on récupère 90,2 g d'une huile visqueuse et limpide. Le rendement isolé est de 68,5 %.

TGA (850° C) : 28,64 %
$\overline{M}n$ : 620
$\overline{M}w$ : 1100
IP : 1,77

L'analyse montre que le polymère obtenu est essentiellement constitué d'une combinaison de motifs de formule :

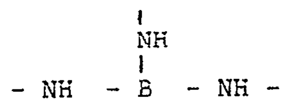

et de motifs de formule :

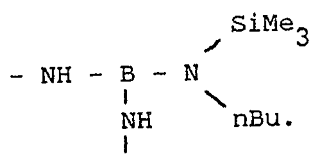

Ces résultats mettent nettement en évidence l'intérêt du procédé selon l'invention pour l'obtention de polymères à base de bore et d'azote d'une part à hauts poids moléculaires et d'autre part à tenue thermique améliorée, et, en conséquence, présentant lors de leur pyrolyse des rendements en nitrure de bore nettement accrus.

TABLEAU

| EXEMPLE | Rapport $BCl_3/Cl_2B-N\begin{smallmatrix}SiMe_3\\SiMe_3\end{smallmatrix}$ | Conc. g/l | T°C | Rdt % | * $\overline{Mn}$ | * $\overline{Mw}$ | * IP | TGA % 800°C |
|---|---|---|---|---|---|---|---|---|
| 2 | 23/77 | 84 | - 28 | 87,9 | 600 | 700 | 1,2 | 12 |
| 3 | 48/52 | 207 | - 35 | 66,8 | 700 | 900 | 1,3 | 18 |
| 4 | 53/47 | 70 | - 15 | 71,6 | 800 | 1300 | 1,6 | 22 |
| 5 | 63,5/36,5 | 78 | - 24 | 65,3 | 800 | 1200 | 1,5 | 17 |
| 6 | 65/35 | 90 | - 25 | 72,2 | 700 | 1100 | 1,5 | 24 |
| 7 | 75/25 | 89 | - 33 | 42,0 | 600 | 700 | 1,3 | 20 |
| 8 | 76/24 | 81 | - 22 | 33,8 | 900 | 1700 | 1,9 | 29 |

* Analyse GPC : colonnes : Shodex 3 (A 80 M) (1 = 1,5m)
+ une colonne A 802 ; solvant $CH_2Cl_2$ anhydre (sans alcool).

## Revendications

1/ Procédé de préparation d'un polymère à base de bore et d'azote caractérisé par le fait que l'on fait réagir (a) un mélange comprenant un trihalogénoborane (composé A) et un composé présentant au moins un atome de bore sur lequel sont directement liés deux atomes d'halogène (composé B), sur b) un composé comprenant au moins un groupement $NH_2$ (composé C).

2/ Procédé selon la revendication 1 caractérisé en ce que la réaction s'effectue en masse.

3/ Procédé selon la revendication 1 caractérisé en ce que la réaction s'effectue en solution dans un solvant organique anhydre.

4/ Procédé selon l'une quelconques des revendications précédentes caractérisé en ce que le rapport molaire entre le composé A et le composé B dans ledit mélange est au moins égal à 1.

5/ Procédé selon l'une quelconque des revendications précédentes caractérisé en ce que le trihalogénoborane est le trichloroborane.

6/ Procédé selon l'une quelconque des revendications précédentes caractérisé en ce que le composé B répond à la formule (1) suivante :

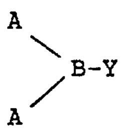

(1)

dans laquelle A représente un halogène, et Y représente

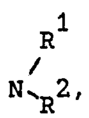

les radicaux $R^1$ et $R^2$ étant choisis, identiques ou différents, parmi l'atome d'hydrogène, les radicaux hydrocarbonés et les radicaux organosilylés et hydrogénoorganosilylés.

7/ Procédé selon la revendication 6 caractérisé en ce que A représente l'atome de chlore.

8/ Procédé selon l'une quelconque des revendications 6 à 7 caractérisé en ce que les radicaux $R^1$ et $R^2$ hydrocarbonés sont choisis parmi les radicaux alkyles, cycloalkyles, aryles, alkylaryles, arylalkyles, alcenyles et alcynyles.

9/ Procédé selon l'une quelconque des revendications 6 à 7 caractérisé en ce que les radicaux $R^1$ et $R^2$ sont des radicaux organosilylés.

10/ Procédé selon la revendication 9 caractérisé en ce que les radicaux $R^1$ et $R^2$ sont des radicaux (triorgano)silylés.

11/ Procédé selon la revendication 10 caractérisé en ce que les radicaux $R^1$ et $R^2$ sont des radicaux (trialkyl)silylés.

12/ Procédé selon l'une quelconque des revendications précédentes caractérisé en ce que le composé C répond à la formule (2) suivante :

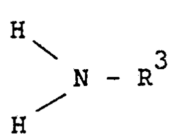

(2)

dans laquelle le radical $R^3$ est choisi parmi l'atome d'hydrogène, les radicaux alkyles, cycloalkyles, aryles, alkylaryles, arylalkyles, alcenyles, alcynyles et les radicaux organosilylés et hydrogénoorganosilylés.

13/ Procédé selon la revendication 12 caractérisé en ce que le radical $R^3$ est choisi parmi l'hydrogène et les radicaux alkyles.

14/ Procédé selon la revendication 13 caractérisé en ce que le radical $R^3$ est l'atome d'hydrogène.

15/ Polymère à base de bore et d'azote susceptible d'être obtenu par la mise en oeuvre d'un procédé tel que défini à l'une quelconque des revendications 1 à 14.

16/ Polymère à base de bore et d'azote caractérisé en ce qu'il présente par molécule :
(a) au moins un motif de formule (I)

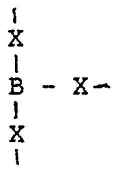

(I)

et (b) au moins un motif de formule (II)

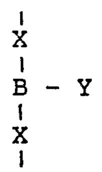

(II)

formules dans lesquelles Y représente

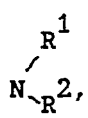

et X représente N-$R^3$, les radicaux $R^1$, $R^2$ et $R^3$ étant choisi, identiques ou différents, parmi l'atome d'hydrogène, les radicaux hydrocarbonés, et les radicaux organosilylés et hydrogénoorganosilylés.

17/ Polymère selon la revendication 16 caractérisé en ce que le rapport molaire entre les motifs de formule (I) et les motifs de formule (II) est moins égal à 1.

18/ Polymère selon l'une quelconque des revendications 16 à 17 caractérisé en ce que les radicaux $R^1$ et $R^2$ sont des radicaux hydrocarbonés du type alkyle, cycloalkyle, aryle, arylalkyle, alkylaryle, alcenyle ou alcynyle.

19/ Polymère selon l'une quelconque des revendications 16 à 17 caractérisé en ce que les radicaux $R^1$ et $R^2$ sont des radicaux organosilylés.

20/ Polymère selon la revendication 19 caractérisé en ce que les radicaux $R^1$ et $R^2$ sont des radicaux (triorgano)silylés.

21/ Polymère selon la revendication 20 caractérisé en ce que les radicaux $R^1$ et $R^2$ sont des radicaux (trialkyl)silylés.

22/ Polymère selon l'une quelconque des revendications 16 à 21 caractérisé en ce que le radical $R^3$ est choisi parmi l'atome d'hydrogène et les radicaux alkyles.

23/ Polymère selon la revendication 22 caractérisé en ce que $R^3$ est l'atome d'hydrogène.

24/ Polymère selon l'une quelconque des revendications 16 à 23 caractérisé en ce que sa masse molaire moyenne en nombre Mn est comprise entre 300 et 50 000, de préférence comprise entre 500 et 5000.

25/ Polymère selon l'une quelconque des revendications 16 à 24 caractérisé en ce qu'il présente une masse molaire moyenne en poids Mw comprise entre 600 et 100 000, de préférence comprise entre 1 000 et 10 000.

26/ Fibre en nitrure de bore caractérisée en ce qu'elle est obtenue par filage puis pyrolyse dans une atmosphère inerte, sous vide ou de préférence sous ammoniac,à une température comprise entre 100 et 2 000° C, d'un polymère tel que défini à l'une quelconque des revendications 15 à 25.

Office européen des brevets

# RAPPORT DE RECHERCHE EUROPEENNE

Numero de la demande

EP 88 40 1975

| DOCUMENTS CONSIDERES COMME PERTINENTS | | | |
|---|---|---|---|
| Catégorie | Citation du document avec indication, en cas de besoin, des parties pertinentes | Revendication concernée | CLASSEMENT DE LA DEMANDE (Int. Cl.4) |
| A | GB-A-2 163 761 (ISOJI TANIGUCHI et al.)<br>--- | | C 08 G 79/08<br>C 04 B 35/00 |
| D,A | US-A-4 581 468 (K.J.L. PACIOREK et al.)<br>----- | | |
| | | | DOMAINES TECHNIQUES RECHERCHES (Int. Cl.4) |
| | | | C 08 G<br>C 04 B |

Le présent rapport a été établi pour toutes les revendications

| Lieu de la recherche | Date d'achèvement de la recherche | Examinateur |
|---|---|---|
| LA HAYE | 14-12-1988 | STIENON P.M.E. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)